# EUROPEAN PATENT APPLICATION

(11) **EP 4 282 935 A1**
(43) Date of publication of application: **29.11.2023**
(21) Application number: 23173918.6
(22) Date of filing: 17.05.2023
(51) Int. Cl.: C10B 53/07, C10G 1/10

(54) **METHOD OF PRODUCING DECHLORINATED WASTE PLASTIC PYROLYSIS OIL**

(30) Priority: 23.05.2022 KR 20220062588
(71) Applicant: SK Innovation Co., Ltd., Seoul 03188 (KR); SK Geo Centric Co., Ltd., Jongno-gu Seoul 03161 (KR)
(72) Inventor: JO, Sang Hwan, 34124 Daejeon (KR); KANG, Soo Kil, 34124 Daejeon (KR); LEE, Ho Won, 34124 Daejeon (KR); JUNG, Jae Heum, 34124 Daejeon (KR); MOON, Se Rah, 34124 Daejeon (KR)
(74) Representative: Frick, Robert

(57) **Abstract**

The present disclosure provides a method of producing dechlorinated waste plastic pyrolysis oil, the method including: (S1) putting a waste plastic feedstock containing moisture into a reactor; (S2) pyrolyzing the waste plastic feedstock by heating the reactor to a target temperature T_{f} at a heating rate R₁ of 2 °C/min or less; and (S3) recovering pyrolysis oil pyrolyzed in the reactor, wherein the step (S2) includes one or more temperature plateaus in which a predetermined temperature T₁ is maintained at a temperature of 100°C or higher for a predetermined time.

## Description

### CROSS-REFERENCE TO RELATED APPLICATIONS

This application claims priority under 35 U.S.C. §119 to Korean Patent Application No. 10-2022-0062588, filed on May. 23 , 2022, in the Korean Intellectual Property Office, the disclosure of which is incorporated herein by reference in its entirety.

### TECHNICAL FIELD

The following disclosure relates to a method of producing dechlorinated waste plastic pyrolysis oil.

### BACKGROUND

Waste plastics are difficult to recycle and are mostly disposed of as garbage. These wastes take a long time to degrade in nature, which causes contamination of the soil and serious environmental pollution. As a method for recycling waste plastics, a method of converting waste plastics into oil by performing a pyrolysis process has been performed.

However, waste plastics contain an excessive amount of impurities such as chlorine, nitrogen, and moisture, and pyrolysis oil produced from such waste plastics has a high content of impurities such as chlorine, nitrogen, metals, and solid by-products compared to fractions produced from crude oil by a general method. Therefore, pyrolysis oil cannot be directly used as a high-value-added fuel such as gasoline or diesel oil, and may be used as a fuel after adsorption of the impurities through a refinery process.

In the refinery process according to the related art, chlorine has been converted into HCl and removed by hydrotreating waste plastic pyrolysis oil in the presence of a hydrotreating catalyst. However, since the waste plastic pyrolysis oil has a high content of chlorine, an excessive amount of HCl is produced during hydrotreating, which causes problems such as equipment corrosion, an abnormal reaction, and deterioration in product properties.

In addition, in the refinery process according to the related art, moisture contained in waste plastics has caused problems such as a reduction in impurity removal efficiency and a decrease in purity of the produced pyrolysis oil.

In order to prevent the above problems caused by impurities such as chlorine and moisture contained in waste plastics, a method of sorting waste plastics having a low content of impurities in a waste plastic feedstock sorting process and pyrolyzing the sorted waste plastics has been performed. However, such a method is not suitable for processing a vast amount of waste plastics generated domestically and industrially. In addition, in the waste plastic pyrolysis process, pyrolysis processes such as a method of adding additives such as CaO and a method of installing a drying facility such as a heater or a blower fan or a pre-treatment facility have been performed, but additional costs such as facility costs are required for these pyrolysis processes.

Therefore, there is a demand for a technique capable of producing pyrolysis oil with a minimum process without a waste plastic feedstock sorting process or a pre-treatment process such as a drying facility.

### SUMMARY

An embodiment of the present disclosure is directed to providing a method of producing waste plastic pyrolysis oil in which a content of chlorine is minimized by performing a pyrolysis process of waste plastics containing impurities without a sorting or pre-treatment process.

In one general aspect, a method of producing dechlorinated waste plastic pyrolysis oil includes: (S1) putting a waste plastic feedstock containing moisture into a reactor; (S2) pyrolyzing the waste plastic feedstock by heating the reactor to a target temperature T_{f} at a heating rate R₁ of 2 °C/min or less; and (S3) recovering pyrolysis oil pyrolyzed in the reactor, wherein the step (S2) includes one or more temperature plateaus in which a predetermined temperature T₁ is maintained at a temperature of 100°C or higher for a predetermined time.

The heating rate R₁ may be 1.5 °C/min or less.

The target temperature Tε may be 400 to 600°C.

A heating rate R₂ in the temperature plateau may satisfy any one of the following conditions:
(1) the heating rate R₂ is substantially 0 °C/min, and
(2) the heating rate R₂ is lower than the heating rate R₁ and a variation in temperature ΔT in the temperature plateau is 10°C or lower.

The number of temperature plateaus may be two or more.

The temperature plateau may include a first temperature plateau at a temperature of 100 to 150°C and a second temperature plateau at a temperature of 200 to 350°C.

An operation time in the temperature plateau may be 30 minutes or longer.

A ratio of an operation time in the temperature plateau to the total operation time in the step (S2) may be 20 to 60%.

The moisture may be contained in an amount of 1 to 25 parts by weight with respect to 100 parts by weight of the waste plastic feedstock.

The step (S2) may be performed in a non-oxidizing atmosphere.

The non-oxidizing atmosphere may be a water vapor atmosphere formed by pressurizing and purging the inside of the reactor with vaporized water vapor.

The step (S2) may be performed at an atmospheric pressure.

The pyrolysis may be performed by further putting an additive into the reactor.

The reactor may be a batch reactor.

The total content of chlorine in the pyrolysis oil recovered in the step (S3) may be 300 ppm or less.

The total content of chlorine in the pyrolysis oil recovered in the step (S3) may be less than 20% of a content of chlorine in the waste plastic feedstock.

Other features and aspects will be apparent from the following detailed description, the drawings, and the claims.

### DETAILED DESCRIPTION OF EMBODIMENTS

Unless the context clearly indicates otherwise, the singular forms of the terms used in the present specification may be interpreted as including the plural forms.

A numerical range used in the present specification includes upper and lower limits and all values within these limits, all double limited values, and all possible combinations of the upper and lower limits in the numerical range defined in different forms. Unless otherwise specifically defined in the present specification, values out of the numerical range that may occur due to experimental errors or rounded values also fall within the defined numerical range.

The expression "comprise(s)" described in the present specification is intended to be an open-ended transitional phrase having an equivalent meaning to "include(s)", "contain(s)", "have (has)", or "are (is) characterized by", and does not exclude elements, materials, or steps, all of which are not further recited herein.

Unless otherwise defined, a unit of "%" used in the present specification refers to "wt %".

Unless otherwise defined, a unit of "ppm" used in the present specification refers to "mass ppm".

Unless otherwise defined, a boiling point (bp) used in the present specification refers to a boiling point at 1 atmosphere (atmospheric pressure, 1 atm).

In order to prevent problems caused by impurities such as chlorine and moisture contained in waste plastics, a method of sorting only waste plastics having a low content of impurities in a waste plastic feedstock sorting process and processing the sorted waste plastics has been performed. However, such a method is not suitable for processing a vast amount of general waste plastics generated domestically. In addition, in a waste plastic pyrolysis process, pyrolysis processes such as a method of adding additives such as CaO and a method of installing a drying facility such as a heater or a blower fan or a pre-treatment facility have been performed, but additional costs such as facility costs are required for these pyrolysis processes.

Therefore, there is a demand for a technique capable of producing high-quality pyrolysis oil in which a content of chlorine is minimized even through a pyrolysis process without additional facilities for waste plastics containing impurities such as moisture and chlorine.

Accordingly, the present disclosure provides a method of producing dechlorinated waste plastic pyrolysis oil, the method including: (S1) putting a waste plastic feedstock containing moisture into a reactor; (S2) pyrolyzing the waste plastic feedstock by heating the reactor to a target temperature Tε at a heating rate R₁ of 2 °C/min or less; and (S3) recovering pyrolysis oil pyrolyzed in the reactor, wherein the step (S2) includes one or more temperature plateaus in which a predetermined temperature T₁ is maintained at a temperature of 100°C or higher for a predetermined time.

The waste plastic feedstock may be domestic waste plastic or industrial waste plastic.

The domestic waste plastic may be a polyolefin-based waste plastic, and specifically, may be a plastic in which PVC, PS, PET, PBT, and the like in addition to PE and PP are mixed. More specifically, the domestic waste plastic may be a mixed waste plastic including 3 wt% or more of PVC together with PE and PP. Chlorine may be contained in an amount of 5,000 ppm or more, and specifically, 5,000 to 15,000 ppm, with respect to 100 parts by weight of the domestic waste plastic. A content of moisture in the domestic waste plastic may be in a wide range, and typically, may be high. For example, moisture may be contained in the domestic waste plastic in an amount of 0.01 to 40 wt%, but this is merely an example, and the content of moisture is not limited thereto.

The industrial waste plastic is industrial waste such as scrap or a defective product generated in a manufacturing process in the industry, and mainly includes PE and PP. Chlorine may be contained in an amount of 100 to 1,000 ppm, specifically, 500 to 1,000 ppm, and more specifically, 700 to 1,000 ppm, with respect to 100 parts by weight of the industrial waste plastic. The industrial waste plastic is scrap or the like generated in a manufacturing process, has a low content of chlorine compared to domestic waste plastic because it maintains a relatively clean state, and has a low content of moisture of 0.03 wt% or less. However, a content of organic chlorine derived from an adhesive or a dye component is high, and in particular, a ratio of chlorine contained in an aromatic ring is high.

In the step (S1), a waste plastic feedstock containing moisture is put into a reactor without a sorting or pre-treatment process of waste plastics. In a case of waste plastics containing moisture in the related art, it is known that impurities such as chlorine are present in the produced pyrolysis oil in excess. On the other hand, when the method of producing pyrolysis oil of the present disclosure is used, a content of chlorine in the produced pyrolysis oil may be minimized.

In the step (S2), the waste plastic feedstock is pyrolyzed by heating the reactor to a target temperature Tε at a heating rate R₁ of 2 °C/min or less. In the step (S2), a dechlorination reaction of the waste plastics occurs, and finally, the waste plastics are converted into hydrocarbon products. The hydrocarbon product has a gas phase. In step (S3), gaseous pyrolysis gas may be introduced into a condenser, cooled, and recovered in a storage tank as liquid pyrolysis oil.

In the step (S2), when the pyrolysis process is performed by rapidly heating the reactor at a heating rate of more than 2 °C/min, desorption of chlorine with carbon occurs, and an organic chlorine compound remains in the product. Accordingly, as the pyrolysis process is performed at a low heating rate of 2 °C/min or less, production of an organic chlorine compound may be prevented, and dechlorination efficiency may be improved. In addition, as waste plastics containing moisture are used as the feedstock in the step (S2), it is possible to effectively trap desorbed chlorine with moisture, such that production of organic chlorine may be minimized. In addition, as one or more temperature plateaus in which a predetermined temperature T₁ is maintained at a temperature of 100°C or higher for a predetermined time are included in the step (S2), the efficiency of trapping chlorine dissociated from the waste plastics in moisture may be maximized, and reaction stability and a reaction yield may be improved. That is, the method of producing dechlorinated waste plastic pyrolysis oil of the present disclosure may maximize the chlorine removal efficiency, such that the content of chlorine in the produced pyrolysis oil may be minimized, and pyrolysis oil having a low content of chlorine may be produced without performing an additional sorting or pre-treatment process.

In an exemplary embodiment, the heating rate may be 1.5 °C/min or less, and preferably 1.1 °C/min or less. Within the above range, the chlorine removal efficiency may be further improved.

In an exemplary embodiment, the target temperature Tε may be 400 to 600°C. When the pyrolysis process is performed by heating the reactor to 400 to 600°C, it is possible to prevent a reduction in pyrolysis efficiency that may occur due to moisture in the waste plastics. In addition, fusion of the waste plastics may be prevented to maximize the yield of pyrolysis oil in which a content of chlorine is minimized. Specifically, the target temperature T_{f} may be 450 to 580°C, and more specifically, 480 to 550°C.

In an exemplary embodiment, a heating rate R₂ in the temperature plateau may satisfy any one of the following conditions:
(1) the heating rate R₂ is substantially 0 °C/min, and
(2) the heating rate R₂ is lower than the heating rate R₁ and a variation in temperature ΔT in the temperature plateau is 10°C or lower.

As in (1), the heating rate R₂ in the temperature plateau is allowed to be in a plateau state substantially at 0 °C/min without a change in temperature, such that the reaction stability may be improved and occurrence of a side reaction may be minimized. In addition, in order to improve the reaction efficiency, the temperature may be partially changed as in (2), but the heating rate R₂ may be set to be lower than the heating rate R₁, and a variation in temperature ΔT in the temperature plateau is set to be 10°C or lower, such that both the improvement of the reaction efficiency and the effect of suppressing a side reaction may be satisfied. That is, as the heating rate R₂ in the temperature plateau satisfies (1) or (2), occurrence of a side reaction may be minimized, such that the reaction stability may be improved, and the chlorine removal efficiency may be improved.

In an exemplary embodiment, the number of temperature plateaus may be two or more. For example, the temperature plateau may include a temperature plateau in which a dehydration reaction occurs and a temperature plateau in which a dechlorination reaction occurs. As two or more temperature plateaus are included, the chlorine removal effect by moisture and the chlorine removal effect by a high temperature may be improved.

In an exemplary embodiment, the temperature plateau may include a first temperature plateau at a temperature of 100 to 150°C and a second temperature plateau at a temperature of 200 to 350°C. The temperature in the first temperature plateau at a temperature of 100 to 150°C is maintained for a predetermined time, such that the effect of trapping chlorine dissociated from the waste plastics in moisture may be maximized, and the chlorine removal effect by moisture may be improved. In addition, the temperature in the second temperature plateau at a temperature of 200 to 350°C is maintained for a predetermined time, such that the chlorine removal effect by a high temperature may be further improved. Specifically, a temperature in the first temperature plateau may be 100 to 130°C, and a temperature in the second temperature plateau may be 250 to 300°C.

In an exemplary embodiment, an operation time in the temperature plateau may be 30 minutes or longer. As the temperature plateau is maintained for 30 minutes or longer, sufficient pyrolysis may be performed. Specifically, the first temperature plateau may be maintained for 1 hour to 2 hours, and the second temperature plateau may be maintained for 2 hours to 4 hours.

In an exemplary embodiment, a ratio of an operation time in the temperature plateau to the total operation time in the step (S2) may be 20 to 60%. As the ratio of the operation time in the temperature plateau to the total operation time in the step (S2) is set to 20 to 60%, chlorine may be sufficiently removed, and the reaction efficiency may be improved. Specifically, the ratio of the operation time in the temperature plateau to the total operation time in the step (S2) may be 20 to 50%, and more specifically, 30 to 50%.

In an exemplary embodiment, the moisture may be contained in an amount of 1 to 25 parts by weight with respect to 100 parts by weight of the waste plastic feedstock. When the amount of moisture exceeds 25 parts by weight, a contact area between olefins and moisture in the pyrolysis product is increased, such that the content of chlorine in the pyrolysis oil is increased due to a back-mixing effect in which chlorine recombines with olefins. In addition, an excessive amount of moisture may cause condensation or corrosion of pipes, and may cause problems deterioration in the purity or quality of the produced pyrolysis oil. The moisture may be contained in an amount of specifically 2 to 25 parts by weight, and preferably 5 to 25 parts by weight, with respect to 100 parts by weight of the waste plastic feedstock. In a case of waste plastics containing almost no moisture, a waste plastic feedstock may be prepared by mixing with water, and waste plastics containing moisture may be used as they are. For example, when a content of moisture in the waste plastics is extremely low, such as 0.03 wt% or less, a predetermined amount of moisture may be mixed with the waste plastics to prepare a feedstock containing moisture in an amount of 1 to 25 parts by weight with respect to 100 parts by weight of the waste plastic feedstock. In addition, waste plastics that satisfy parts by weight of moisture like the domestic waste plastic may be used as they are, such that drying process efficiency or cost-effectiveness may be improved.

In an exemplary embodiment, the pyrolysis process may be performed in a non-oxidizing atmosphere. The non-oxidizing atmosphere is an atmosphere in which waste plastics are not oxidized (combusted), and efficient pyrolysis may be performed in the atmosphere. For example, the non-oxidizing atmosphere may be an atmosphere in which an oxygen concentration is adjusted to 1 vol% or less, or an atmosphere of an inert gas such as nitrogen, water vapor, carbon dioxide, or argon. The pyrolysis process may be stably performed in a low-oxygen atmosphere in which an oxygen concentration is adjusted to 1 vol% or less.

In an exemplary embodiment, the non-oxidizing atmosphere may be a water vapor atmosphere formed by pressurizing and purging the inside of the reactor with vaporized water vapor. The inside of the reactor may be pressurized and purged with water vapor generated from moisture to remove oxygen, and thus a non-oxidizing atmosphere may be created by water vapor, such that there is no need to perform an additional purge process using an inert gas.

In an exemplary embodiment, the pyrolysis process may be performed at an atmospheric pressure. A pyrolysis reactor may be operated at an atmospheric pressure, such that a pyrolysis product may be obtained with a high yield and the reaction may be performed in an environment with excellent work convenience and safety.

In an exemplary embodiment, the pyrolysis process may be performed by further putting an additive into the reactor. The additive may be one or more dechlorination agents selected from the group consisting of a metal oxide, a metal hydroxide, and a metal carbonate, but is not limited thereto. As the additive is further added, the chlorine removal effect may be further improved. The metal may be an alkali metal or an alkaline earth metal, and specifically, may be sodium, magnesium, potassium, calcium, or the like. Specifically, the dechlorination agent may be calcium hydroxide, sodium hydroxide, magnesium hydroxide, potassium hydroxide, calcium oxide, magnesium oxide, calcium carbonate, sodium carbonate, potassium carbonate, or the like.

In an exemplary embodiment, the reactor may be a batch reactor. Specifically, the reactor may be any batch reactor capable of controlling stirring and heating, and for example, the pyrolysis may be performed in a rotary kiln type batch reactor, but the present disclosure is not limited thereto.

Through the pyrolysis process, pyrolysis gas may be obtained by boiling point. Specifically, the pyrolysis gas may include Naphtha (bp of 150°C or lower), Kero (bp of 150 to 265°C), LGO (bp of 265 to 380°C), and UCO-2/AS (bp of 380°C or higher). In addition, the pyrolysis gas may include a balance of low-boiling point hydrocarbon compounds such as methane (CH₄), ethane (C₂H₆), and propane (C₃H₈). In addition, in the pyrolysis gas, a weight ratio of light fractions (the sum of Naphtha and Kero) to heavy fractions (the sum of LGO and UCO-2/AR) may be 0.1 to 3, 0.1 to 2.0, or 0.2 to 1.0. As described above, when the pyrolysis process is performed while maintaining the temperature at 100 to 150°C for a predetermined time and maintaining the temperature at 150 to 350°C for a predetermined time, a weight of the produced pyrolysis gas may vary according to each temperature range.

Before the pyrolysis gas is introduced into the condenser, a low-boiling point gas containing low-boiling point hydrocarbon compounds such as methane (CH₄), ethane (C₂H₆), and propane (C₃H₈) in the pyrolysis gas may be separately recovered. The pyrolysis gas generally contains combustible materials such as hydrogen, carbon monoxide, and low-molecular-weight hydrocarbon compounds. Examples of the hydrocarbon compounds include methane, ethane, ethylene, propane, propene, butane, and butene. Since the pyrolysis gas contains combustible materials, the pyrolysis gas may be reused as a fuel for heating the reactor or rotary kiln.

The condenser may include a zone through which a coolant flows, and the pyrolysis gas introduced into the condenser may be liquefied by the coolant and converted into pyrolysis oil. When the pyrolysis oil produced in the condenser rises to a predetermined level, the pyrolysis oil is transported to and recovered in a storage tank.

The liquid pyrolysis oil recovered in the storage tank may include an oil layer and a water layer. In addition to the pyrolysis gas, water vapor generated from moisture is also liquefied and recovered in the storage tank, and oil and water separation proceeds to form an oil layer and a water layer in the liquid pyrolysis oil.

The water layer contains a chlorine compound, which may cause corrosion of the storage tank, and a neutralizer may be added to the water layer to prevent corrosion of the storage tank. The neutralizer may contain an alkali metal compound or an alkaline earth metal compound having a pH of 7 or higher when dissolved in water. Specifically, the neutralizer may contain a hydroxide, an oxide, a carbonate, a hydrogen carbonate, a basic carbonate, or a fatty acid salt of an alkali metal or alkaline earth metal. The alkali metal or the alkali earth metal may be a metal commonly used in the art. Examples of the alkali metal include lithium (Li), sodium (Na), potassium (K), rubidium (Rb), cesium (Cs), and francium (Fr), and examples of the alkaline earth metal include beryllium (Be), magnesium (Mg), calcium (Ca), strontium (Sr), barium (Ba), and radium (Ra). The neutralizer may be added alone or mixed with a solvent such as alcohol to improve neutralization efficiency.

In the case where the neutralizer is added to the water layer, the neutralizer may be added in an appropriate amount by measuring a pH of the water layer using a pH meter located at the bottom of the storage tank.

When the oil layer and the water layer are separated, the oil layer may be immediately recovered or may be recovered after removing the water layer, such that an oil layer (waste plastic pyrolysis oil) in which a content of chlorine is minimized may be recovered. The water layer may be removed by discharging, and the discharged water layer may be purified and then recirculated to be used as water to be mixed with the waste plastics.

An electric field may be applied to effectively separate the oil layer and the water layer, and the oil layer and the water layer may be separated in a short time by electrostatic adhesion due to application of the electric field. In addition, an additive may be added as necessary to increase the oil-water separation efficiency, and the additive may be a common demulsifier known in the art.

In a case where the water layer is discharged and removed, a density is detected using a density profiler, such that it is possible to prevent the oil layer from being removed together with the water layer when the water layer is removed, and only the water layer may be effectively removed.

In an exemplary embodiment, the total content of chlorine in the waste plastic pyrolysis oil produced by the pyrolysis process may be 300 ppm or less. Through the waste plastic pyrolysis process of the present disclosure, the total content of chlorine in the produced pyrolysis oil may be minimized only by controlling the moisture and heating rate without adding an additive or a neutralizer. The total content of chlorine may be 10 to 300 ppm without limitation.

In an exemplary embodiment of the present disclosure, the total content of chlorine in the produced pyrolysis oil by the pyrolysis process may be less than 20% of a content of chlorine in the waste plastic feedstock. The chlorine removal ratio may be increased according to the moisture and heating rate, and the content of chlorine in the waste plastic feedstock may be reduced by 80% or more. Specifically, the content of chlorine in the waste plastic feedstock may be reduced by 90% or more, and may be reduced by 90% to 97% without limitation.

Hereinafter, preferred Examples and Comparative Examples of the present disclosure will be described. However, each of the following Examples is merely a preferred example, and the present disclosure is not limited to the following Examples.

### Example 1

Domestic mixed plastics including 3 wt% or more of PVC together with PE and PP were extruded at 250°C to prepare domestic waste plastic pellets. The total content of Cl in the domestic waste plastic pellets was 9,000 ppm, and the content of moisture was 0.03 wt%, which was barely present.

After moisture was additionally mixed with the domestic waste plastics so that the weight of moisture was adjusted to about 20 g per dry weight of about 100 g of the waste plastics, the resulting waste plastics were put into a batch reactor, and pyrolysis was started. A non-oxidizing atmosphere was created with water vapor generated during the waste plastic pyrolysis process, and a reaction was performed in the non-oxidizing atmosphere. The pyrolysis was performed by heating the reactor from a pyrolysis start temperature of 25°C to 425°C at a heating rate of 2 °C/min, and when the temperature of the reactor reached 110°C in the heating process, the temperature was maintained for 2 hours. Pyrolysis gas generated by the pyrolysis was trapped in a condenser, and waste plastic pyrolysis oil was obtained in a storage tank.

### Example 2

Waste plastic pyrolysis oil was obtained by performing a reaction in the same manner as that of Example 1, except that the weight of moisture was adjusted to about 15 g per dry weight of about 100 g of the waste plastics, the resulting waste plastics were put into the reactor, and pyrolysis was performed by heating the reactor at a heating rate of 1 °C/min.

### Example 3

In Example 1, when the temperature of the reactor reached 300°C, the reaction was performed by adding a process of maintaining the temperature for 4 hours. Thereafter, waste plastic pyrolysis oil was obtained by performing a reaction in the same manner as that of Example 1, except that the reactor was heated again to 425°C at a heating rate of 2 °C/min.

### Example 4

In Example 1, when the temperature of the reactor during heating reached 120°C, the reactor was heated to 130°C at a heating rate of 0.08 °C/min for 2 hours. Thereafter, pyrolysis was performed by heating the reactor again at a heating rate of 2 °C/min, and when the temperature of the reactor reached 320°C, the reactor was heated to 330°C at a heating rate of 0.04 °C/min for 4 hours. Thereafter, waste plastic pyrolysis oil was obtained by performing a reaction in the same manner as that of Example 1, except that the reactor was heated again to 425°C at a heating rate of 2 °C/min.

### Example 5

Waste plastic pyrolysis oil was obtained by performing a reaction in the same conditions as those of Example 1, except that the weight of moisture was adjusted to about 30 g per dry weight of about 100 g of the waste plastics, the resulting waste plastics were put into a batch reactor, and pyrolysis was performed.

### Comparative Example 1

Waste plastic pyrolysis oil was obtained by performing a reaction in the same conditions as those of Example 1, except that pyrolysis was performed at a heating rate of 4 °C/min.

### Comparative Example 2

Waste plastic pyrolysis oil was obtained by performing a reaction in the same conditions as those of Example 1, except that pyrolysis was performed at a heating rate of 3 °C/min.

### Comparative Example 3

Waste plastic pyrolysis oil was obtained by performing a reaction in the same conditions as those of Example 1, except that pyrolysis was performed without the temperature plateau process in which the temperature of the reactor was maintained at 110°C.

### Comparative Example 4

Waste plastic pyrolysis oil was obtained by performing a reaction in the same conditions as those of Comparative Example 3, except that pyrolysis was performed without putting additional water.

### Evaluation Examples

Moisture in waste plastics was measured using the Karl Fischer method.

The content of chlorine in the obtained waste plastic pyrolysis oil was measured by ICP and XRF analysis.

**[Table 1]**

| | Example 1 | Example 2 | Example 3 | Example 4 | Example 5 | Comparativ e Example 1 | Comparativ e Example 2 | Comparativ e Example 3 | Comparativ e Example 4 |
|---|---|---|---|---|---|---|---|---|---|
| Heating rate (°C/min) | 2 | 1 | 2 | 2 | 2 | 4 | 3 | 2 | 2 |
| Weight of moisture per dry weight of 100 g of waste plastics (q) | 20 | 15 | 20 | 20 | 30 | 20 | 20 | 20 | - |
| First temperature plateau (°C/hr) | 110/2 | 110/2 | 110/2 | 120 to 130/2 | 110/2 | 110/2 | 110/2 | - | - |
| Second temperature plateau (°C/hr) | - | - | 300/4 | 320 to 330/4 | - | - | - | - | - |
| Total content of chlorine in waste plastics (ppm) | 9,000 | 9,000 | 9,000 | 9,000 | 9,000 | 9,000 | 9,000 | 9,000 | 9,000 |
| Total content of chlorine in pyrolysis oil (ppm) | 285 | 273 | 217 | 220 | 384 | 594 | 519 | 425 | 505 |

In Example 1, it could be confirmed that, as one temperature plateau, in which waste plastics containing 20 g of moisture per dry weight of 100 g of waste plastics were heated at a heating rate of 2 °C/min, and when the temperature reached 100°C, the corresponding temperature was maintained for 2 hours, was included, the total content of chlorine in the waste plastic pyrolysis oil was significantly reduced to 285 ppm.

In Example 2, it could be confirmed that the total content of chlorine in the waste plastic pyrolysis oil was further reduced to 273 ppm when waste plastics containing 15 g of moisture per dry weight of 100 g of waste plastics were heated at a heating rate of 1 °C/min.

On the other hand, in Comparative Examples 1 and 2, it could be confirmed that, as the heating rates were set to 4 °C/min and 3 °C/min, respectively, the total contents of chlorine in the waste plastic pyrolysis oils were 594 ppm and 519 ppm, respectively, which showed that the chlorine reduction effect was significantly reduced. In Example 5, it could be confirmed that, as 30 g of moisture per dry weight of 100 g of waste plastics was contained, the total content of chlorine in the waste plastic pyrolysis oil was 384 ppm, which showed that the chlorine reduction effect was slightly reduced.

In Examples 3 and 4, it could be confirmed that, as one temperature plateau was further included in Example 1, the total content of chlorine in the waste plastic pyrolysis oil was most effectively reduced to 217 to 220 ppm.

On the other hand, in Example 3, it could be confirmed, as a temperature plateau was not included, the total content of chlorine in the waste plastic pyrolysis oil was 425 ppm, which showed that the chlorine reduction effect was slightly reduced. In Comparative Example 4, it could be confirmed that, as a temperature plateau was not included while performing the pyrolysis process on waste plastics containing no moisture, the total content of chlorine in the waste plastic pyrolysis oil was 550 ppm, which showed that the chlorine reduction effect was significantly reduced.

As set forth above, according to the present disclosure, it is possible to produce waste plastic pyrolysis oil in which a content of chlorine is minimized by performing a pyrolysis process of waste plastics containing impurities without a sorting or pre-treatment process.

Although exemplary embodiments of the present disclosure have been described hereinabove, the present disclosure is not limited to the exemplary embodiments, but may be implemented in various different forms, and it will be apparent to those skilled in the art to which the present disclosure pertains that the exemplary embodiments may be implemented in other specific forms without departing from the technical idea or essential feature of the present disclosure. Therefore, it is to be understood that the exemplary embodiments described hereinabove are illustrative rather than restrictive in all aspects.

## Claims

1. A method of producing dechlorinated waste plastic pyrolysis oil, the method comprising:
(S1) putting a waste plastic feedstock containing moisture into a reactor;
(S2) pyrolyzing the waste plastic feedstock by heating the reactor to a target temperature T_{f} at a heating rate R₁ of 2 °C/min or less; and
(S3) recovering pyrolysis oil pyrolyzed in the reactor,
wherein the step (S2) includes one or more temperature plateaus in which a predetermined temperature T₁ is maintained at a temperature of 100°C or higher for a predetermined time.

2. The method of claim 1, wherein the heating rate R₁ is 1.5 °C/min or less.

3. The method of claim 1, wherein the target temperature Tε is 400 to 600°C.

4. The method of claim 1, wherein the heating rate R₂ in the temperature plateau satisfies any one of the following conditions:
(1) the heating rate R₂ is substantially 0 °C/min, and
(2) the heating rate R₂ is lower than the heating rate R₁ and a variation in temperature ΔT in the temperature plateau is 10°C or lower.

5. The method of claim 1, wherein the number of temperature plateaus is two or more.

6. The method of claim 1, wherein the temperature plateau includes a first temperature plateau at a temperature of 100 to 150°C and a second temperature plateau at a temperature of 200 to 350°C.

7. The method of claim 1, wherein an operation time in the temperature plateau is 30 minutes or longer.

8. The method of claim 1, wherein a ratio of an operation time in the temperature plateau to the total operation time in the step (S2) is 20 to 60%.

9. The method of claim 1, wherein the moisture is contained in an amount of 1 to 25 parts by weight with respect to 100 parts by weight of the waste plastic feedstock.

10. The method of claim 1, wherein the step (S2) is performed in a non-oxidizing atmosphere.

11. The method of claim 10, wherein the non-oxidizing atmosphere is a water vapor atmosphere formed by pressurizing and purging the inside of the reactor with vaporized water vapor.

12. The method of claim 1, wherein the step (S2) is performed at an atmospheric pressure.

13. The method of claim 1, wherein the pyrolysis is performed by further putting an additive into the reactor.

14. The method of claim 1, wherein the reactor is a batch reactor.

15. The method of claim 1, wherein the total content of chlorine in the pyrolysis oil recovered in the step (S3) is 300 ppm or less.
